# EUROPÄISCHE PATENTSCHRIFT

(11) **EP 2 218 159 B1**
(45) Veröffentlichungstag und Bekanntmachung des Hinweises auf die Patenterteilung: **09.11.2011**
(21) Anmeldenummer: 08783464.4
(22) Anmeldetag: 02.09.2008
(51) Int. Cl.: H02K 3/18, H02K 21/00

(54) **STATORWICKLUNG FÜR ELEKTROMOTOR**
STATOR WINDING FOR AN ELECTRIC MOTOR
ENROULEMENT DE STATOR POUR MOTEUR ÉLECTRIQUE

(30) Priorität: 30.10.2007 CH 16832007
(43) Veröffentlichungstag der Anmeldung: 18.08.2010
(73) Patentinhaber: ThyssenKrupp Presta Aktiengesellschaft, 9492 Eschen (LI)
(72) Erfinder: STAUDENMANN, Christian, CH-3152 Mamishaus (CH)
(74) Vertreter: Wegmann, Urs
(86) Internationale Anmeldenummer: PCT/CH2008/000364
(87) Internationale Veröffentlichungsnummer: WO 2009/055942

(56) Entgegenhaltungen:
- EP-A- 1 217 713
- EP-A- 1 235 327
- WO-A-2007/012207
- DE-A1- 19 701 342

## Beschreibung

Die Erfindung bezieht sich auf einen Stator für einen elektronisch kommutierten Elektromotor nach dem Oberbegriff des Anspruch 1.

Der Erfindungsgegenstand befasst sich mit der Herstellung von Ankerwicklungen für einen elektronisch kommutierten Elektromotor, welche es ermöglichen, eine Bauweise für hohen Wirkungsgrad bei hoher Wirtschaftlichkeit zu realisieren.

Bei Servolenkungen für Kraftfahrzeuge werden insbesondere an die motorischen Antriebe besonders hohe Anforderungen gestellt. Wegen der erforderlichen sehr kompakten Bauformen und hohen geforderten Antriebsleistungen werden bei Elektromotoren entsprechend hohe Wirkungsgrade benötigt. Ausserdem müssen bei derartigen Massenprodukten in der Automobilindustrie die Herstellkosten entsprechend tief sein, was eine hohe Wirtschaftlichkeit bei der Herstellung eines solchen Antriebes erforderlich macht. Es werden deshalb vermehrt elektronisch kommutierte Elektromotoren für derartige Antriebe eingesetzt, wie dies beispielsweise in der EP 1 499 003 A1 dargestellt ist. Die dort offenbarten, mehrphasigen Statorwicklungen werden nacheinander pro Phase auf die Statorpole gewickelt und dessen Drähte ausserhalb des Stators nach dem Wickeln jeder Phasenanordnung miteinander zu einem dreiphasigen System verbunden. Jede der drei Phasen enthält drei Statorpole mit den zugehörigen Wicklungen, die jeweils eine Polgruppe pro Phase bilden. Innerhalb jeder Polgruppe ist die Wicklungsrichtung von einem Pol zum nächsten abwechselnd angeordnet und für alle drei Polgruppen gleichsinnig bzw. identisch vorgesehen. Dies ist im Stand der Technik eine seit langem übliche Vorgehensweise, um drei - phasige Polgruppen zu bewickeln und um dadurch eine rotationssymmetrische Wicklungsanordnung zur Erzeugung eines Drehfeldes für einen Elektromotor zu realisieren.

Das Bewickeln kompakter Statoren ist sehr aufwändig und insbesondere das Verbinden von mehreren Drähten ausserhalb des Stators führt zu zusätzlichen Aufwendungen, und unerwünschten Streufeldern, was die Anordnung weniger wirtschaftlich macht.

Eine diesbezüglich verbesserte Anordnung wird in der WO 2007/012207 beschrieben. Die Statorpole werden dort alle mit einem Draht nacheinander, ohne Unterbruch, bewickelt. Die Einteilung in die Polgruppen der Phasen erfolgt dadurch, dass an den gewünschten Orten die Drähte stirnseitig am Stator über eine Art Schlaufe heraus- und wieder zurückgeführt werden, so dass dort das Drahtpaket kontaktiert und wo notwendig aufgeschnitten und kontaktiert werden kann, derart dass im Stirnbereich des Stators die gewünschten Polgruppen zu der vorgesehenen Mehrphasen Wicklungsanordnung verdrahtet werden kann. Die Bewicklung aller Pole erfolgt hierbei mit einem einzelnen Draht von einem Pol zum anderen jeweils immer mit abwechselndem Wicklungssinn. Die Bewicklung wird dadurch zwar vereinfacht aber die stirnseitige Verdrahtung zur mehrphasigen Wicklungsanordnung erfolgt hierbei über den ganzen Umfangsbereich des Stators. Dadurch werden relativ viele Anschlussstellen notwendig und die dort entstehenden Streufelder verteilen sich ebenfalls über den Umfang und es ist schwierig, dort im Stirnseitenbereich Sensoren zur Motorsteuerung mit optimaler Wirkung anzubringen.

Die Aufgabe der vorliegenden Erfindung liegt darin, die Nachteile des vorerwähnten Standes der Technik zu beseitigen. Insbesondere besteht die Aufgabe darin, einen Stator für einen elektronisch kommutierten Elektromotor mit Ankerwicklungen auf den Statorpolen zu realisieren, welcher äusserst kompakt aufgebaut ist und einen hohen Wirkungsgrad mit wenig Streuverlusten des Statorfeldes zu ermöglichen bei hoher Wirtschaftlichkeit bei der Herstellung.

Die Aufgabe wird erfindungsgemäss durch die Ausbildung eines Stators nach Anspruch 1 gelöst, sowie nach dem Verfahren zum Betrieb eines Elektromotors mit einem derartigen Stator nach Anspruch 6. Die abhängigen Ansprüche definieren weitere vorteilhafte Ausführungsformen.

Die Aufgabe wird also dadurch gelöst, dass der Stator für einen elektronisch kommutierten Elektromotor einen zylinderförmigen Statormantel mit mehreren nach Innen gegen die Motorachse gerichteten Polen aus ferromagnetischem Material aufweist, wobei die Pole einen zylinderförmigen Hohlraum umschliessen zur Aufnahme eines Rotors und wobei jeder Pol mit je einer Wicklung mit mehreren Drahtwindungen versehen ist, zur Ausbildung eines magnetischen Ankers, wobei die Windungen der Wicklungen ohne Unterbruch nacheinander um die Pole gewickelt angeordnet sind. Der Stator weist mindestens drei Polgruppen auf mit jeweils der gleichen Anzahl Pole mit jeweils mindestens 3 Polen. Diese sind aufeinander folgend am Umfang des Stators kreisförmig verteilt angeordnet, wobei die Wicklungen mindestens jeweils am Anfang und am Ende einer Polgruppe stirnseitig herausgeführt sind und dort mindestens teilweise aufgeschnitten sind und dort derart kontaktiert sind, dass die zugehörigen Wicklungen zu jeder Polgruppe jeweils eine Phase bildet. Die Wicklungen jeder Polgruppe enthalten ein eigenes Anschlusspaar, wobei von jedem dieser Anschlusspaare der eine Anschluss stirnseitig am Stator zu einem Sternpunkt verbunden ist. Die Wicklungen an den Polen sind nacheinander folgend mit abwechselndem Wicklungssinn gewickelt, wobei ein einzelner Pol bei einem einzigen Übergang zwischen zwei Polgruppen eine Wicklung trägt mit gleichem Wicklungssinn wie die vorangehende letzte Wicklung der vorhergehenden Polgruppe.

Beim Wickeln werden die Pole in einem vordefinierten Wickelsinn mit Leitungsdraht umwickelt. Dadurch bildet sich eine wiederholende Folge der Richtung des Wickelsinns um die Pole heraus. Jeder Phase des elektrischen Wechselfeldes, mit dem der Elektromotor angesteuert wird, wird eine Polgruppe, die aus unmittelbar aufeinander abfolgende kreisförmig angeordneten Polen gebildet wird, zugeordnet. Dabei ist die Anzahl der Pole, aus denen die Polgruppe bestimmt wird gleich dem Quotienten der Gesamtanzahl der Pole geteilt durch die Anzahl der Phasen des Wechselfeldes. Entsprechend der sich wiederholenden Folge der Richtung des Wickelsinns, ergibt sich ein Muster des Wickelsinns, das Wicklungsmuster, für jede einzelne Polgruppe, die aus einer entsprechenden Anzahl von Polen besteht.

Eine sehr wirtschaftliche Anordnung eines kompakten elektronisch kommutierten, bzw. gesteuerten und/oder geregelten Elektromotors mit Permanentmagnetrotor wird ermöglicht durch Ausbildung einer drei- phasigen Motoranordnung bei welcher der Stator 9 Pole aufweist und jede Phase als Polgruppe ausgebildet ist, die aus drei Polen besteht die nacheinander mit abwechselndem Wicklungssinn bewickelt sind. Die Wicklungen der Pole von zwei dieser Polgruppen sind in identischer Wicklungsrichtung ausgeführt und die Wicklungen der dritten Polgruppe in umgekehrter Wicklungsrichtung. Beim Übergang von einer Polgruppe zur anderen sind Wicklungsrichtungen der zwei benachbarten Pole bei zwei Polgruppenübergängen gegensinnig und bei einem Übergang gleichsinnig angeordnet.

Diese Ausbildung ermöglicht die stirnseitige Verdrahtung der dreiphasigen Wicklungsanordnung auf sehr effiziente Weise und es sind nur wenige Schnitte und Kontaktierungsstellen dazu notwendig. Die Umpolung einer einzigen Wicklungsrichtung erfolgt derart, dass der dort stirnseitig herausgeführte eine Sternpunktanschluss näher beabstandet liegt zu den anderen Sternpunktanschlüssen. Durch dieses Vorgehens wird die Verbindung des Sternpunkt sehr stark vereinfacht und die einen Anschlüsse der Anschlusspaare der Polgruppen welche die Phasenabgänge bilden rücken stirnseitig am Stator näher zusammen und sind dadurch innerhalb der Hälfte des Kreisumfanges des Stators liegend angeordnet. Ein allenfalls benötigter Anschluss des Sterpunktes kann dann ebenfalls nahe an die Anschlüsse der Phasenabgänge gelegt werden und wird mit Vorteil ebenfalls innerhalb dieses Halbkreises erfolgen.

Die Anschlüsse des Motors sind dadurch sehr vereinfacht zu realisieren, da die Anzahl Verdrahtungen der Wicklungen minimiert ist und diese nicht mehr den ganzen Kreisumfang belegt. Dadurch werden im stirnseitigen Bereich des Stators auch Zonen geschaffen, welche keine durch die Verdahtung erzeugte zusätzliche Streufelder aufweisen. In diesen Bereichen können Sensoren, wie beispielsweise Magnetfeldsensoren, vorteilhaft angeordnet werden zur Erfassung von Betriebsdaten bei entsprechend höherer Auflösung. Derartige Signale werden weiter ausgewertet zur Erfassung der Betriebssituation und / oder zur Steuerung der Motorelektronik.

Die elektrische Speisung des Motors erfolgt über eine gesteuerte bzw. geregelte Leistungselektronik welche die Phasenwicklungen der drei Polgruppen mit einem Wechselstrom, vorzugsweise etwa Sinusförmig, mit vorgegebener Phasenlage speist, derart, dass im vom Stator umschlossenen zylindrischen Hohlraum, am Rotor ein um die Motorachse drehendes Magnetfeld erzeugt wird. Die Umkehrung der Windungsrichtung der einen Wicklung in einer der Polgruppen muss entsprechend bei der Ansteuerung berücksichtigt werden.

Die Erfindung wird nun nachfolgend beispielsweise und mit schematischen Figuren näher erläutert. Es zeigen:
- Fig. 1: schematisch ein Wicklungsschema für eine erfindungsgemässe Ausbildung eines 9-poligen Stators mit dessen Ausbildung der Drahtwicklungen und Anschlüssen. Der Mantel des zylinderförmigen Stators ist in abgewickelter Form dargestellt;
- Fig. 2: schematisch und im Querschnitt ein elektronisch kommutierter Motor mit Rotor und Stator gemäss Fig. 1.

Ein elektronisch kommutierter Elektromotor besteht im Wesentlichen aus einem Stator 20, der zylinderförmig ausgebildet ist mit einem zylinderförmigen Mantel 20a und mit den Polen P (in den Figuren als Beispiel mit P₁, P₂, P₃, P₄, P₅, P₆, P₇, P₈, P₉ bezeichnet) aus ferromagnetischem Material, die gegen das Innere des Zylinders und gegen dessen zentrale Motorachse 2 ausgerichtet sind, wobei die Pole P jeweils Wicklungen L (in den Figuren als Beispiel mit LU₁, LU₂, LU₃, LV₁, LV₂, LV₃, LW₁, LW₂, LW₂, LW₃ bezeichnet) tragen und auf diese Art als Ankerwicklung ausgebildet sind. Im Zentrum des Hohlraums des Statorzylinders ist ein Rotor 1 angeordnet, der um die Zylinderachse 2 frei rotieren kann und Permanentmagnete aufweist, die gegen die Pole P ausgerichtet sind.

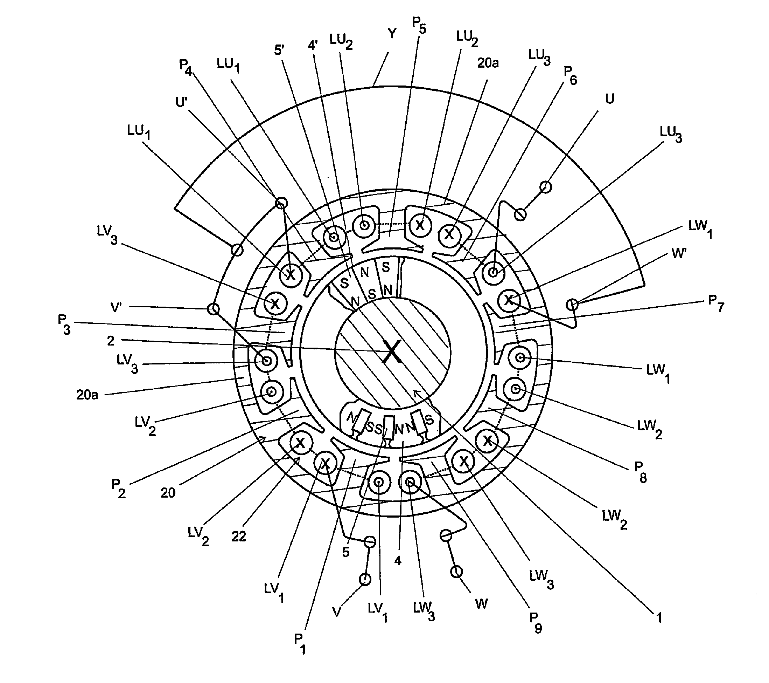

Die Wicklungen L sind in der Regel derart elektrisch miteinander verbunden bzw. geschaltet, dass die Wicklungen ein mehrphasiges System insbesondere ein dreiphasiges System LU, LV, LW bilden zur Erzeugung eines Drehfeldes, welches durch eine elektronische Einspeisung in die Wicklungen über die Wicklungsanschlüsse U, V, W der gebildeten Phasenwicklungen und den Sternpunkt Y in welchem die anderen drei Wicklungsanschlüsse U', V', W' zusammengeführt sind. Dieses Drehfeld versetzt dann den Rotor mit den darauf angeordneten Permanentmagneten 5 in eine rotierende Bewegung. Die Permanentmagnete 5, 5' sind am Rotor derart angeordnet, dass am Umfang Rotorpole 4, 4' ausgebildet sind mit abwechselnder magnetischer Polarität. Magnete 5' können, wie in der Figur 1 (im oberen Teil der Darstellung) im Querschnitt gezeigt ist, direkt in radialer Richtung weg von der Motorachse 2 magnetisiert und mit auf dem Umfang wechselnden Magnetpolen 4' im Rotor positioniert werden, so dass diese Magnetpole nahe beabstandet zu den Statorpolen P ausgerichtet sind. Eine weitere, besonders bevorzugte, Anordnung der Permanentmagnete 5, in Fig. 1 im unteren Teil der Darstellung veranschaulicht, wird ebenfalls radial zur Motorachse 2 im Rotor 1 ausgerichtet mit dazwischen liegendem ferromagnetischem Material welches dann die Rotorpole 4 bildet. In diesem Fall sind die Permanentmagnete in Umfangsrichtung magnetisiert und innerhalb eines ferromagnetischen Rotorpoles 4 gleichpolig ausgerichtet und wechselnd von einem Rotorpol 4 zum nächsten.

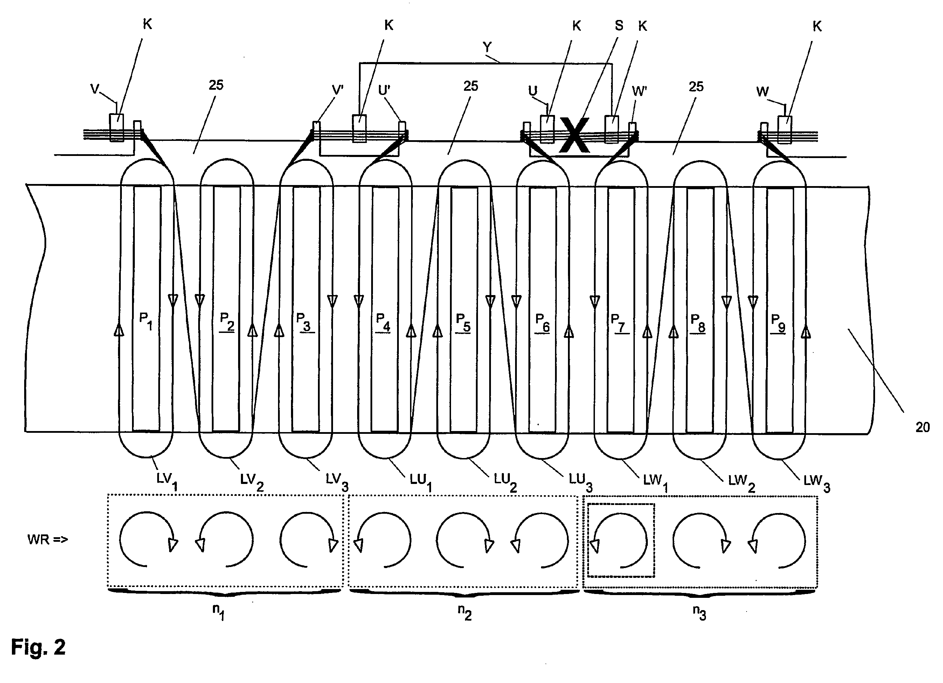

Anhand von einem bevorzugten Beispiel eines Elektromotors mit einem Stator 20 mit 9 Polen P1 bis P9 wird nachfolgend die Erfindung in Fig. 2 im Querschnitt und in Fig. 1 in einem Wickelschema mit abgerolltem Zylindermantel dargestellt. Die Wicklungen LU, LV, LW werden in einem einzigen Durchgang nacheinander gewickelt. Es wird beispielsweise am Wicklungsanfang der Draht für die Wicklung LV1 um den Pol 1 festgehalten und mit mehreren Windungen um den Pol 1 gewickelt und danach auf den Pol 2 geführt, wo wiederum mehrere Windungen abgelegt werden entsprechend der Wickelrichtung WR. Danach wird die Wicklung LV3 auf den Pol P3 abgelegt. Diese drei Wicklungen LV1-3 wurden auf die Pole P1 bis P3 der ersten dreier Polgruppe n1 abgelegt und bilden eine erste Phase V. Nach Beendigung der Wicklung LV3 um den Pol P3 wird der Draht stirnseitig beim Stator 20 in einer kurzen Schleife aus dem Polbereich weg- und herausgeführt und dann über eine isolierend Stütze 25 wiederum zurück zum nächsten Pol P4, wo die Wicklung LU1 abgelegt wird und danach die Wicklung LU2 um den Pol P5, und dann die Wicklung LU3 um den Pol P6 zur Ausbildung einer zweiten Phase U mit der Polgruppe n2. Nach Beendigung dieser Wicklung LU3 wird der Draht wiederum in einer Schleife stirnseitig herausgeführt und wieder über den Stützisolator 25 zurück geführt für die Erstellung der dritten Phase W mit den drei Wicklungen LW1-3 um die Pole P7 bis P9, die Polgruppe n3 bildend. Die herausgeführten Drahtschleifen bilden stirnseitig gut zugängliche Drahtübergänge von einer Phase zur nächsten. Derartige Drahtübergänge werden dort herausgeführt, wo Kontaktstellen K benötigt werden, um einerseits ein dreiphasiges Wicklungssystem zu beschalten und andererseits die Stromzuführungen zu erstellen. Es werden die Drahtübergänge mit Vorteil an der einen Stirnseite des zylinderförmigen Stators 20 angeordnet und über isolierende Stützen 25 geführt und positioniert.

Im bevorzugten Beispiel gemäss Fig. 1 sind je nach Ausführung ein einzelner Draht oder mehrere Drähte gleichzeitig nacheinander auf die 9 Pole P1 bis P9 gewickelt dargestellt und bilden somit jeweils die Wicklungspakete LU₁, LU₂, LU₃ und LV₁, LV₂, LV₃ und LW₁, LW₂, LW₃ mit je drei Wicklungen. Jedes Wicklungspaket bestimmt dadurch eine Phase, also insgesamt drei Phasen U, V, W mit den drei Polgruppen n₁, n₂, n₃. Dadurch dass die Drähte in einem einzigen Durchgang gewickelt werden, ergibt sich einzig ein Wicklungsanfang und ein Wicklungsende beim Wicklungsvorgang, wo die Drähte festgehalten werden müssen. Danach werden durch Kontaktierung K und durch Auftrennung S der entsprechenden Drahtübergänge die Wicklungen derart beschaltet, dass ein dreiphasiges System mit den drei Phasenanschlüssen U, V, W und einer Sternpunktverbindung Y entsteht. In der Sterpunktverbindung Y sind die drei Phasenabgänge U', V', W' der drei Wicklungspakete in bekannter Weise zum Sternpunkt zusammengeführt. Bei der 9 poligen Anordnung sind stirnseitig lediglich der Wickeldrahtanfang und das Wickeldrahtende, beispielsweise bei den Polen P1 und P9, und beispielsweise die Drahtübergänge zwischen den Polen P3 und P4 sowie zwischen den Polen P6 und P7 zu kontaktieren. Hierzu werden die Übergänge zwischen den Polen P6 und P7 mit einer Auftrennungen S versehen. Je nach Wicklungsausführung kann auch der Wicklungsanfang und das Wicklungsende durch Auftrennung des Drahtpacketes dort erfolgen. Im günstigsten Fall sind bei der neun - poligen Ausbildung des Stators 20 nur fünf Kontaktierungen K notwendig zur Erstellung der drei Phasenanschlüsse U, V, W und des Sternpunktes Y, wie dies in den Figuren 1 und 2 dargestellt ist.

Erfindungsgemäss wird der Wicklungssinn nicht für die Wicklungen der Polgruppen n1, n2, n3 in wiederholender Folge gleich ausgebildet, wie dies bis anhin üblich war, sondern für eine Polgruppe n1 genau mit umgekehrtem Wicklungssinn ausgebildet. Dies wird erreicht, indem der Wicklungssinn der Wicklungen auf zwei aufeinanderfolgenden Polen P6, P7 genau in einem einzigen Wechsel von einer der Polgruppen n2 zur nächsten Polgruppe n3 zueinander gleichsinnig ist, während der Wicklungssinn der Wicklungen beim Wechsel zwischen allen übrigen Polen stets abwechselt.

Der Stator für einen elektronisch kommutierten Elektromotor, gemäss vorliegender Erfindung, enthält einen zylinderförmigen Statormantel 20a und mehreren nach Innen, gegen die Motorachse 2 gerichtete Pole (P) aus ferromagnetischem Material, wobei die Pole P einen zylinderförmigen Hohlraum umschliessen zur Aufnahme eines Rotors 1 und jeder Pol P ist mit je einer Wicklung L mit mehreren Drahtwindungen versehen zur Ausbildung eines magnetischen Ankers. Die Windungen der Wicklungen L sind ohne Unterbruch nacheinander um die Pole P gewickelt angeordnet und der Stator 20 weist mindestens drei Polgruppen n auf mit jeweils der gleichen Anzahl Pole P und die jeweils mindestens 3 Pole P aufweisen. Diese sind aufeinander folgend am Umfang des Stator 20 kreisförmig verteilt angeordnet, wobei die Wicklungen L mindestens jeweils am Anfang und am Ende einer Polgruppe stirnseitig herausgeführt sind und dort mindestens teilweise aufgeschnitten sind und dort derart kontaktiert sind, dass die zugehörigen Wicklungen L zu jeder Polgruppe, die jeweils eine Phase bildet, ein eigenes Anschlusspaar U-U', V-V', W-W' enthalten. Bei jedem dieser Anschlusspaare ist der eine Anschluss U', V', W' stirnseitig am Stator 20 zu einem Sternpunkt Y verbunden. Hierbei sind die Wicklungen L an den Polen P nacheinander folgend mit abwechselndem Wicklungssinn WR gewickelt, wobei ein einzelner Pol P bei einem einzigen Übergang zwischen zwei Polgruppen n eine Wicklung L mit gleichem Wicklungssinn trägt, wie die vorangehende letzte Wicklung L der vorhergehenden Polgruppe n. In Figur 1 ist unterhalb der Abwicklung des zylinderförmigen Stators 20 das zu den Polen P zugehörige Wickelschema mit den einzelnen Wicklungsrichtungen WR dargestellt. Es ist dort ersichtlich, dass für jede Wicklung L die Wicklungsrichtung für jeden Pol P nacheinander abwechselt bis auf die erste Wicklung LW1 der dritten Polgruppe n3, gegenüber der vorangehende dritten Wicklung LU3 der zweiten, vorangehenden Polgruppe n2. Dies benachbarten Wicklungen LU3 und LW1 der beiden benachbarten Polgruppen haben die gleiche Wicklungsrichtung WR. Danach wechseln die Wicklungsrichtungen WR wieder ab.

Das Wickelschema folgt auch der Regel, dass innerhalb jeder Polgruppe n die Wicklungsrichtungen der einzelnen Wicklungen L abwechseln und dass die Polgruppen n die gleichen Wicklungsrichtungen WR enthalten ausser einer Polgruppe n. Im vorliegenden Beispiel weist die Polgruppe n2 und n3 die gleiche Gruppierung der abwechselnden Wicklungsrichtungen WR innerhalb der Polgruppe auf und die erste Polgruppe n1 eine umgekehrte Reihenfolge der abwechselnden Wicklungen L. Die verdrehte Wicklungsanordnung einer Polgruppe n kann innerhalb des Umfanges bzw. der Abwicklung des Stators 20 auch in anderer Reihenfolge angeordnet sein. Dadurch verschieben sich dann die stirnseitigen Anschlussbereiche je nach Anforderung. Besonders wichtig ist nun, dass durch die vogeschlagene Vorgehensweise der dort stirnseitig herausgeführte eine Sternpunktanschluss, beispielsweise W', näher zu den anderen zwei Sternpunktanschlüssen U', V' zusammenrückt. Schon dadurch wird der Verdrahtungsaufwand verringert und auf einen kleineren Bereich fokussiert. Zusätzlich wird es möglich die Anschlüsse U, V, W der Anschlusspaare der Polgruppen (n), welche die Phasenabgänge stirnseitig am Stator 20 bilden, innerhalb der Hälfte des Kreisumfanges des Stators 20 liegend anzuordnen. Im günstigsten Fall können nicht nur die Phasenanschlüsse U, V, W innerhalb einer Hälfte untergebracht werden sondern auch der Sternpunktanschluss Y. Um dieses Schema einhalten zu können muss die gesamte Polzahl ungerade sein und einem Vielfachen der Anzahl Phasen entsprechen. Besonders geeignet ist hierbei die gezeigte neun - polige Statoranordnung 20.

Hierbei ist beim Betrieb die Wicklungen L der Polgruppen n darauf zu achten, dass die Ansteuerung mit einem elektrischen Wechselstrom derart erfolgt, dass sich ein umlaufendes, drehendes Magnetfeld im vom Stator 20 umschlossenen zylindrischen Hohlraum am Rotor 1 ausbildet. Es muss also auf die richtige Phasenlage der elektrischen Speisung der Phasenwicklung geachtet werden.

Die Verdrahtung im stirnseitigen Bereich des Stators und die Erstellung der elektrischen Motoranschlüsse wird in der Folge besonders einfach ausführbar und lässt sich sehr kompakt und kostengünstig realisieren. Dies kann beispielsweise mit einfachen Kontaktringelementen und / oder Schienenelementen ausgebildet werden, mit beispielsweise integrierten Steckanschlüssen. Besonders wichtig ist hierbei, dass nun ein grosser Bereich vorhanden ist ohne Verdrahtungselemente, stirnseitig am Stator 20, die Störfelder generieren und dass nun in diesem Bereich Motorelemente, wie Pole P und Polwicklungen L ungestört zugänglich sind. Dieser Bereich, abgewandt von den Phasenabgängen U, V, W und der Sternpunktverbindung Y, ermöglicht es nun dort Sensoren anzuordnen, vorzugsweise Magnetfeldsensoren bei verminderten Störeinflüssen. Mit derartigen Sensoren können beispielsweise die Betriebsbedingungen des Motors erfasst werden und diese auch für die Steuerung und Regelung des Motors verwendet werden. Dadurch wird das Nutzsignal erhöht und es ist ein besseres Ansprechverhalten und ein präziserer Betrieb des Motors möglich. Dies ist besonders wichtig bei Hilfsantrieben in Lenksystemen.

## Patentansprüche

1. Stator für einen elektronisch kommutierten Elektromotor mit einem zylinderförmigen Statormantel (20a) und mehreren nach Innen, gegen die Motorachse (2) gerichteten Polen (P) aus ferromagnetischem Material, wobei die Pole (P) einen zylinderförmigen Hohlraum umschliessen zur Aufnahme eines Rotors (1) und wobei jeder Pol (P) mit je einer Wicklung (L) mit mehreren Drahtwindungen versehen ist zur Ausbildung eines magnetischen Ankers, wobei die Windungen der Wicklungen (L) ohne Unterbruch nacheinander um die Pole (P) gewickelt angeordnet sind und der Stator (20) mindestens drei Polgruppen (n) aufweist mit jeweils der gleichen Anzahl Pole (P) und jeweils mindestens 3 Polen (P) und diese aufeinander folgend am Umfang des Stator (20) kreisförmig verteilt angeordnet sind, wobei die Wicklungen (L) mindestens jeweils am Anfang und am Ende einer Polgruppe stirnseitig herausgeführt sind und dort mindestens teilweise aufgeschnitten sind und dort derart kontaktiert sind, dass die zugehörigen Wicklungen (L) zu jeder Polgruppe, die jeweils eine Phase bildet, ein eigenes Anschlusspaar (U-U', V-V', W-W') enthalten und dass von jedem dieser Anschlusspaare der eine Anschluss (U', V', W') stirnseitig am Stator (20) zu einem Sternpunkt (Y) verbunden ist, **dadurch gekennzeichnet, dass** die Wicklungen (L) an den Polen (P) nacheinander folgend mit abwechselndem Wicklungssinn (WR) gewickelt sind, wobei ein einzelner Pol (P) bei einem einzigen Übergang zwischen zwei Polgruppen (n) eine Wicklung (L) trägt mit gleichem Wicklungssinn wie die vorangehende letzte Wicklung (L) der vorhergehenden Polgruppe (n), wobei die gesamte Polzahl ungerade ist und einem vielfachen der Anzahl Phasen entspricht.

2. Stator nach Anspruch 1, **dadurch gekennzeichnet, dass** genau eine der-Polgruppen, ein zu allen anderen Polgruppen gegenläufiges Wicklungsmuster aufweist.

3. Stator nach Anspruch 1 oder 2, **dadurch gekennzeichnet, dass** der Stator (20) neun - polig ausgebildet ist mit drei Polgruppen (n) und jede Polgruppe (n) drei Pole (P) aufweist.

4. Stator nach einem der vorhergehenden Ansprüche, **dadurch gekennzeichnet, dass** die Anschlüsse (U, V, W) der Anschlusspaare der Polgruppen (n), welche die Phasenabgänge stirnseitig am Stator (20) bilden, innerhalb der Hälfte des Kreisumfanges des Stators (20) liegend angeordnet sind.

5. Stator nach Anspruch 4, **dadurch gekennzeichnet, dass** im stirnseitigen Bereich der anderen Hälfte des Kreisumfanges Stators (20), abgewandt von den Phasenabgängen (U, V, W) und der Sternpunktverbindung (Y), Sensoren angeordnet sind, vorzugsweise Magnetfeldsensoren.

## Claims

1. Stator for an electronically commutated electric motor with a cylindrical stator casing (20a) and several poles (P) directed inward towards the motor axis (2) and made of ferromagnetic material, wherein the poles (P) surround a cylindrical cavity to receive a rotor (1) and wherein each pole (P) has a winding (L) with several wire turns to form a magnetic stator, wherein the turns of the windings (L) are wound uninterruptedly in succession about the poles (P) and the stator (20) has at least three pole groups (n) each with the same number of poles (P) and each with at least three poles (P) and these are arranged successively distributed in a circle on the periphery of the stator (20), wherein the windings (L) at least at the start and end of a pole group are guided out on the face and there at least partly cut away and contacted so that the associated windings (L) of each pole group which each form a phase contain a single connection pair (U-U', V-V', W-W') and that from each of these connection pairs the one connection (U', V', W') is connected to a star point (Y) at the face on the stator (20), **characterised in that** the windings (L) at the poles (P) are wound successively with alternating winding direction (WR), and wherein a single pole (P) at a single transition between two poles groups (n) carries a winding (L) with the same winding direction as the last preceding winding (L) of the preceding pole group (n), wherein the total number of poles is uneven and corresponds to a multiple of the number of phases.

2. Stator according to claim 1, **characterised in that** precisely one of the pole groups has a winding pattern running in the opposite direction to all other pole groups.

3. Stator according to claim 1 or 2, **characterised in that** the stator (20) is formed with nine poles with three pole groups (n), and each pole group (n) has three poles (P).

4. Stator according to any of the preceding claims, **characterised in that** connections (U, V, W) of the connection pairs of the pole groups (n) which form the phase outputs on the face of the stator (20) are arranged lying inside half the circular periphery of the stator (20).

5. Stator according to claim 4, **characterised in that** in the face area of the other half of the circular periphery of the stator (20) facing away from the phase outputs (U, V, W) and the star point connection (Y) are arranged sensors, preferably magnetic field sensors.

## Revendications

1. Stator pour moteur électrique à commutation électronique incluant une enveloppe cylindrique (20a) de stator et plusieurs pôles (P) en matière ferromagnétique orientés vers l'intérieur en direction de l'axe (2) du moteur, dans lequel les pôles (P) entourent un espace creux cylindrique pour recevoir un rotor (1) et dans lequel chaque pôle (P) est pourvu d'un enroulement (L) à plusieurs spires de fil pour former un induit magnétique, dans lequel les spires des enroulements (L) sont disposées enroulées autour du pôle (P) l'une après l'autre sans interruption et le stator (20) comprend au moins trois groupes (n) de pôles incluant chacun le même nombre de pôles (P) et chacun au moins 3 pôles (P) et ceux-ci sont disposés de façon répartie en arc de cercle en se suivant l'un l'autre sur la périphérie du stator (20), dans lequel chacun des enroulements (L) est sorti frontalement au moins au début et à la fin d'un groupe de pôles et y est au moins partiellement dénudé et leurs contacts y sont établis d'une manière telle que les enroulements (L) appartenant à chaque groupe de pôles, qui forme respectivement une phase, contiennent une paire propre (U-U', V-V', W-W') de raccords et qu'un premier (U', V', W') des raccords de chacune de ces paires de raccords est connecté frontalement sur le stator (20)à un neutre (Y), **caractérisé en ce que** les enroulements (L) sont enroulés en se suivant l'un l'autre sur les pôles (P) selon un sens alterné (WR) d'enroulement, d'une manière telle qu'un pôle individuel (P) porte, à une transition unique entre deux groupes (n) de pôles, un enroulement (L) du même sens d'enroulement que le dernier enroulement précédent (L) du groupe précédent (n) de pôles et que le nombre total de pôles est impair et correspond à un multiple du nombre de phases.

2. Stator selon la revendication 1, **caractérisé en ce qu'**exactement un des groupes de pôles présente un type d'enroulement de sens opposé à celui de tous les autres groupes de pôles.

3. Stator selon la revendication 1 ou 2, **caractérisé en ce que** la configuration du stator (20) est à neuf pôles formant trois groupes (n) de pôles et que chaque groupe (n) de pôles comprend trois pôles (P).

4. Stator selon l'une quelconque des revendications précédentes, **caractérisé en ce que** les raccords (U, V, W) des paires de raccords des groupes (n) de pôles qui forment frontalement les sorties de phases sur le stator (20) sont disposés de manière à être situées à l'intérieur de la moitié de la périphérie circulaire du stator (20).

5. Stator selon la revendication 4, **caractérisé en ce que** des capteurs, de préférence des capteurs de champ magnétique sont disposés, sur la périphérie circulaire du stator (20), dans la zone frontale de la deuxième moitié opposée aux sorties (U, V, W) de phases et à la connexion (Y) de neutre.
